## Europäisches Patentamt
## European Patent Office
## Office européen des brevets

(19)

(11) Numéro de publication: **0 190 729**
**B1**

(12) **FASCICULE DE BREVET EUROPÉEN**

(45) Date de publication du fascicule du brevet:
21.06.89

(51) Int. Cl.⁴: **H 04 L 7/00**, H 04 J 3/06

(21) Numéro de dépôt: 86101440.5

(22) Date de dépôt: 04.02.86

(54) Répéteur pour distributeur d'horloge tripliquée.

(30) Priorité: 07.02.85 FR 8501722

(43) Date de publication de la demande:
13.08.86 Bulletin 86/33

(45) Mention de la délivrance du brevet:
21.06.89 Bulletin 89/25

(84) Etats contractants désignés:
BE CH DE FR GB IT LI NL SE

(56) Documents cité:
FR-A-2 324 190
FR-A-2 427 747

(73) Titulaire: **ALCATEL CIT, 33, rue Emeriau, F-75015 Paris (FR)**

(72) Inventeur: **Denhez, Alain, 43 avenue du Général de Gaulle, F-78140 Velizy- Villacoublay (FR)**
Inventeur: **Hargoaa, Françis, 12, Avenue de la Grande Armée, F-75017 Paris (FR)**
Inventeur: **Aubree, Jean, 1 rue Cardon, F-78380 Bougival (FR)**

(74) Mandataire: **Weinmiller, Jürgen, Lennéstrasse 9 Postfach 24, D-8133 Feldafing (DE)**

EP 0 190 729 B1

LIBER, STOCKHOLM 1989

**Description**

L'invention concerne la distribution d'une horloge tripliquée à des récepteurs. Il est bien connu, lorsque les récepteurs sont éloignés de l'horloge tripliquée, d'insérer dans chaque liaison entre une horloge de l'horloge tripliquée et un récepteur, un ou plusieurs répéteurs en fonction de l'éloignement des récepteurs. L'invention concerne plus particulièrement le cas où chaque signal d'horloge comporte un signal de synchronisation constitué par deux impulsions, une négative et une positive, chacune de durée égale à une période de signal d'horloge, le passage d'une impulsion à l'autre constituant un top de synchronisation tel que décrit dans FR-A-2 324 180.

Avec un signal d'horloge comportant un tel signal de synchronisation, l'emploi de n répéteurs classiques en cascade conduirait à multiplier par n les dispersions de temps de propagation des fronts relatifs au top de synchronisation, d'où une erreur sur le rapport cyclique du signal d'horloge délivré par chaque récepteur fonction du nombre de répéteurs dans une liaison horloge/récepteur, erreur concernant le signal d'horloge régénéré à la place du signal de synchronisation.

Il est à note que les demandes EP-A-0 190 730 et EP-A-0 190 731, déposées à la même date que la présente demande, décrivent et revendiquent également des dispositifs de distribution d'horloge tripliquée.

La présente invention a pour but de supprimer l'accumulation des temps de propagation des fronts d'horloge relatifs aux tops de synchronisation dans chaque liaison entre une horloge de l'horloge tripliquée et un récepteur afin de limiter l'erreur sur le rapport cyclique du signal d'horloge délivré par le récepteur.

L'invention à pour objet un répéteur pour distribution d'horloge tripliquée comportant des horloges délivrant chacune un signal d'horloge et de synchronisation ayant un signal d'horloge et un signal de synchronisation constitué par une impulsion négative et une impulsion positive ayant chacune une durée égale à une période du signal d'horloge, une horloge étant reliée à un récepteur par au moins un répéteur, caractérisé par le fait qu'il comprend un inverseur pour inverser un signal d'horloge et de synchronisation entrant, un circuit d'inversion, un circuit de test, un circuit de restitution et de décalage et un circuit de génération d'horloge, que le circuit d'un version est relié en entrée à l'inverseur et en sortie d'une part au circuit de test et d'autre part au circuit de restitution et de décalage, ledit circuit de test effectuant un test de la durée des impulsions du signal délivré par l'inverseur pour détecter le signal de synchronisation et délivrer une impulsion suite à la détection, que le circuit de restitution et de décalage à une première entrée reliée au circuit de test, une deuxième et une troisième entrées reliées à une sortie du circuit d'inversion et une sortie reliée au circuit de génération d'horloge, ledit circuit de restitution et de décalage délivrant une impulsion de durée égale à celle d'une impulsion dudit signal de synchronisation et décalée de deux périodes dudit signal d'horloge par rapport à ladite impulsion négative du signal de synchronisation, et que le circuit de génération d'horloge est relié en entrée à la sortie du circuit de restitution et de décalage, et au circuit d'inversion et délivre en sortie un signal d'horloge et de synchronisation.

Les caractéristiques et avantages de l'invention apparaîtront plus clairement lors de la description qui va suivre d'exemples de réalisation illustrés par les figures annexées dans lesquelles:

- la figure 1 représente une distribution d'horloge tripliquée à un récepteur, utilisant des répéteurs de l'invention,
- la figure 2 représente un répéteur de l'invention,
- la figure 3 est un chronogramme de signaux dans la figure 2,
- la figure 4 représente une distribution tripliquée à plusieurs récepteurs, utilisant des répéteurs de l'invention.

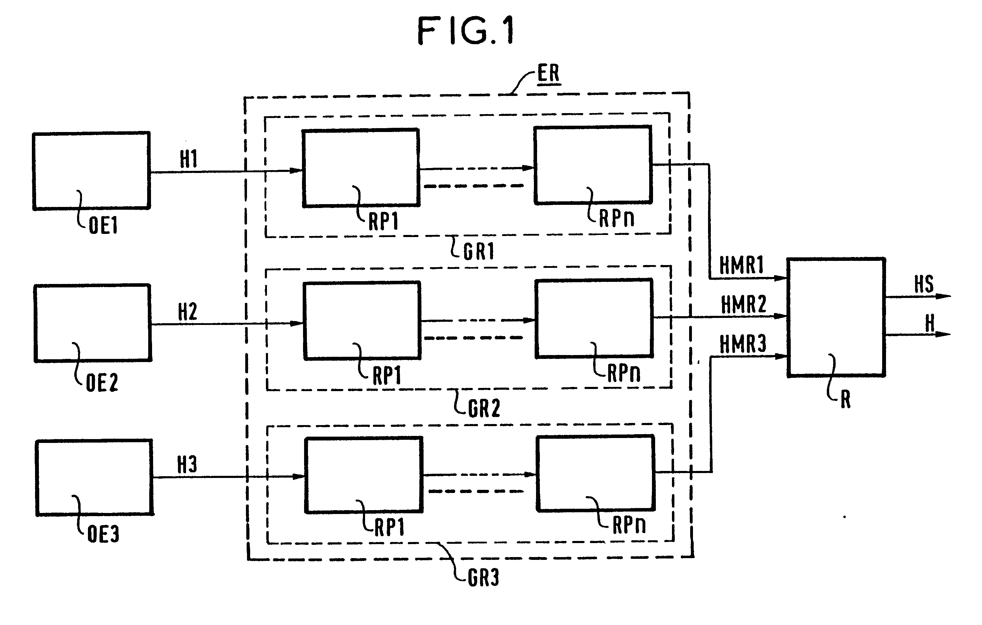

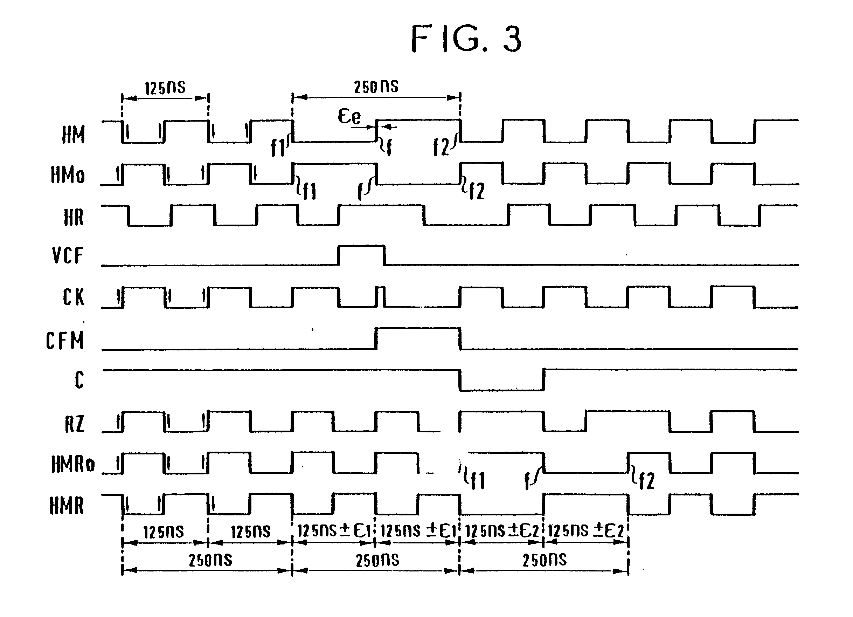

La figure 1 représente une distribution d'horloge tripliquée à un récepteur utlisant des répéteurs de l'invention. Dans cette figure, OE1, OE2, OE3 sont des horloges esclaves pilotées de manière connue par au moins une horloge mère, non représentée, ER est un ensemble de répéteurs constitué par trois groupes de répéteurs GR1, GR2, GR3 constitués chacun par n répéteurs en série, n étant au moins égal à 1, R est un récepteur. Chaque horloge esclave est reliée au récepteur par un groupe de répéteurs, et délivre un signal d'horloge et de synchronisation, H1, H2, H3, respectivement. Chaque signal d'horloge et de synchronisation est constitué, comme représenté figure 3 par le signal HM, par un signal d'horloge et un signal de synchronisation; le signal de synchronisation est lui même constitué par une impulsion négative et une impulsion positive de même durée, chaque impulsion ayant une durée égale à une période du signal d'horloge. Le passage de l'impulsion négative à l'impulsion positive du signal de synchronisation, se fait par un front f positif, alors que si l'on avait un signal d'horloge à la place du signal de synchronisation, le front f serait un front négatif pour le signal d'horloge.

Par conséquent le front f, positif, correspond à une inversion du front négatif du signal d'horloge ce front f définit le top de synchronisation. Dans le chronogramme de la figure 3 le signal HM est relatif au signal d'horloge et de synchronisation à l'entrée d'un répéteur d'horloge quelconque d'un groupe de répéteurs dans le cas du répéteur d'horloge RP1 le signal correspond au signal d'horloge et de synchronisation émis par une horloge esclave, H1, H2, ou H3.

Le récepteur R reçoit du dernier répéteur RPn de chaque groupe de répéteurs, GR1, GR2, GR3, un signal d'horloge et de synchronisation HMR1, HMR2, HMR3, respectivement, et délivre un signal de synchronisation HS et un signal d'horloge H à des organes utilisateurs, non représentés.

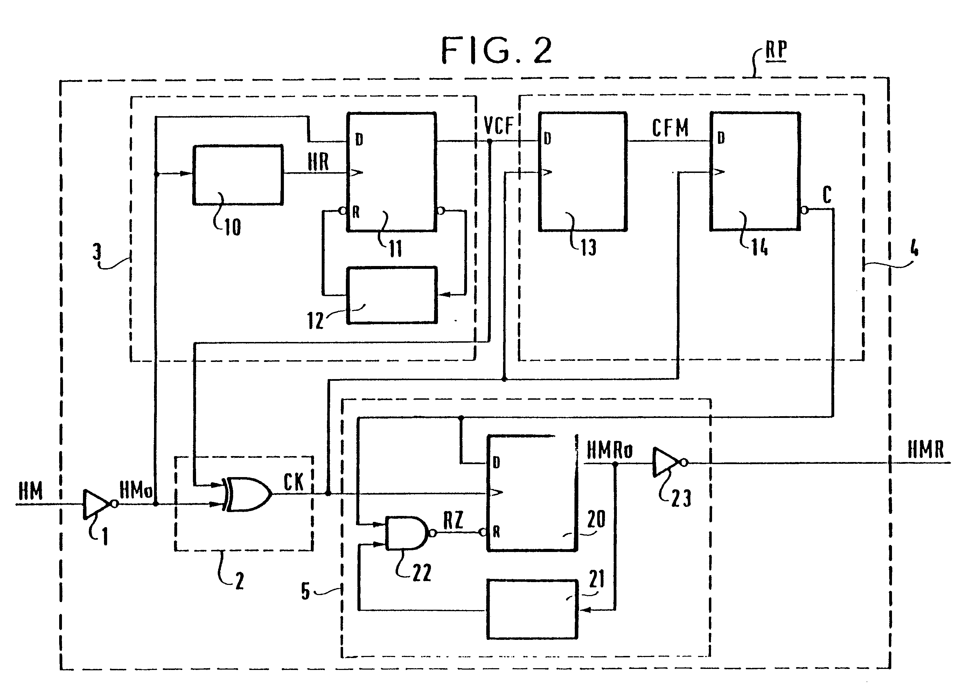

La figure 2 représente un répéteur de l'invention, comprenant un inverseur 1, un circuit d'inversion 2, un circuit de test 3, un circuit de restitution et de décalage 4, et un circuit de génération d'horloge 5.

L'inverseur 1 reçoit le signal d'horloge et de synchronisation et délivre le signal HMo, au circuit d'inversion 2 et au circuit de test 3.

Le circuit de test 3 comporte une première ligne à retard 10, une bascule 11, de type D, et une deuxième ligne à retard 12. La première ligne à retard 10 est reliée en entrée à la sortie de l'inverseur 1, et en sortie à l'entrée horloge de la bascule 11, à laquelle elle délivre un signal HR qui correspond au signal HMo retardé, le retard étant compris entre une demi-période et une période du signal d'horloge du signal d'horloge et de synchronisation HMo; l'entrée de données D de la bascule est reliée à la sortie de l'inverseur 1, la sortie directe de la bascule délivre une impulsion VCF et est reliée au circuit d'inversion 2 et au circuit de restitution et de décalage 4, et la sortie inverse de la bascule est reliée à l'entrée de remise à zéro par la deuxième ligne à retard 12.

Le circuit de restitution et de décalage 4 comporte deux bascules 13, 14, de type D; la première bascule 13 a son entrée horloge reliée en sortie du circuit d'inversion 2, une entrée de données D reliée à la sortie directe de la bascule 11 et une sortie directe reliée à une entrée de données D de la deuxième bascule 14 la deuxième bascule 14 à une entrée horloge reliée en sortie du circuit d'inversion 2 et une sortie inverse reliée au circuit de génération d'horloge 5.

Le circuit d'inversion 2 est constitué par une porte OU exclusif ayant une première entrée reliée à la sortie de l'inverseur 1, une deuxième entrée reliée à la sortie directe de la bascule 11, et une sortie reliée d'une part aux entrées horloges des bascules 13 et 14 et d'autre part au circuit de génération d'horloge 5; la porte OU exclusif délivre un signal CK.

Le circuit de génération d'horloge 5 comporte une bascule 20, de type D, une ligne à retard 21, une porte ET-NON 22, et un inverseur 23. La bascule 20 a une entrée horloge reliée à la sortie de la porte OU exclusif du circuit d'inversion 2, une entrée de données D reliée à la sortie inverse de la bascule 14, et une sortie directe reliée d'une part à l'inverseur 23 et d'autre part à une entrée de la porte ET-NON 22 par la ligne à retard 21. La porte ET-NON 22 à une autre entrée reliée à la sortie inverse de la bascule 14 et une sortie reliée à une entrée de remise à zéro de la bascule 20. La bascule 20 délivre un signal d'horloge et de synchronisation régénéré HMRo et l'inverseur délivre le signal d'horloge et de synchronisation HMR, ce signal étant délivré à l'entrée d'un autre répéteur d'horloge dans un groupe de répéteurs, ou à l'entrée du récepteur R relié au groupe si le répéteur est le dernier dudit groupe.

La figure 3 est un chronogramme de différents signaux de la figure 2.

Le fonctionnement du répéteur d'horloge représenté figure 2 est le suivant. L'inverseur 1 qui reçoit le signal d'horloge et de synchronisation HM délivre le signal HMo à la première ligne à retard 10 et à la bascule 11. A titre d'exemple on supposera que le signal d'horloge du signal d'horloge et de synchronisation HM a une fréquence de 8 MHz (sa période est donc de 125 nanosecondes), et que le signal de synchronisation du signal HM a une période de 250 nanosecondes, le signal de synchronisation étant compris entre les fronts f1 et f2 du signal HM représenté figure 3, le front f, positif, correspondant au passage de l'impulsion négative à l'impulsion positive du signal de synchronisation.

La première ligne à retard 10 délivre un signal d'horloge retardé HR ayant un retard de l'ordre de 80 nanosecondes par rapport au signal HMo; le signal HR permet la prise en compte du signal de synchronisation du signal la bascule 11 délivre une impulsion VCF dont la largeur est fixée par la deuxième ligne à retard 12 à une valeur de 50 nanosecondes par exemple. Cette impulsion VCF apparaît lorsque le signal le synchronisation incorporé dans le signal d'horloge et de synchronisation HM, donc dans HMo, est pris en compte par le signal d'horloge retardé HR. Le circuit de test effectue donc un test de la durée des impulsions constituant le signal et délivre une impulsion VCF, quand la durée d'une impulsion du signal HMo est supérieure au retard de la première ligne à retard, c'est-à-dire lorsque le signal HMo présente le signal de synchronisation; le rôle du circuit de test est donc de détecter le signal de synchronisation par un test de la durée des impulsions du signal HMo, et de délivrer l'impulsion VCF suite à la détection.

L'impulsion VCF est appliquée au circuit d'inversion 2, c'est-à-dire à une entrée de la porte OU exclusif constituant ce circuit, et provoque dans le signal CK délivré par ladite porte OU exclusif une impulsion lorsque le signal HMo prend la valeur 0, ce qui correspond au front f du signal de synchronisation dans le signal HMo. Le front de cette impulsion dans le signal CK est un front positif correspondant à un front f négatif dans le signal le circuit d'inversion 2 réalise donc une inversion du front f du signal HMo. Cette impulsion du signal CK permet la prise en compte, par la bascule 13, de l'impulsion VCF, de sorte que ladite bascule 13 délivre une impulsion CFM de durée égale à l'impulsion négative, fronts f et f2, du signal de synchronisation du signal HMo. La bascule 14 qui reçoit sur son entrée horloge le signal CK délivre en l'absence de l'impulsion CFM sur son entrée, un signal C de valeur 1 sur sa sortie inverse; lorsque l'impulsion CFM est appliquée à l'entrée de la bascule 14, celle-ci délivre, sur sa sortie inverse, une impulsion négative dans le signal C, cette impulsion étant décalée par rapport à l'impulsion CFM d'une période du signal CK la durée de l'impulsion négative du signal C est égale à une période du signal CK, donc à la durée d'une impulsion du signal de synchronisation, soit 125 nanosecondes d'après l'exemple choisi.

La bascule 20 du circuit de génération d'horloge 5, qui reçoit le signal C de la bascule 14, délivre le signal HMRo lorsque le signal C à la valeur 1, la bascule 20, pilotée par le signal CK, délivre sur sa sortie directe un signal de valeur 1 qui remet la bascule à zéro par l'intermédiaire de la ligne à retard 21 et la porte NON-ET 22 (signal RZ) la ligne à retard introduisant un retard de 60 nanosecondes; on retrouve ainsi en sortie de la bascule 20 un signal d'horloge de même période que le signal CK, les fronts positifs du signal HMRo coïncidant, dans le temps avec ceux du signal CK. Lorsque le signal C à la valeur 0, ce qui correspond à l'impulsion négative signalée ci-dessus, le signal HMRo en sortie de la bascule 20 présente une impulsion positive de durée égale à une période du signal CK; lorsque le signal C reprend la valeur 1, le signal HMRo présente une impulsion négative ayant une durée égale à une période du signal CK, soit 125 nanosecondes, l'impulsion positive étant comprise entre les fronts f1 et f, et l'impulsion négative étant comprise entre les fronts f et f2 du signal HMRo. On retrouve donc dans le signal HMRo le signal de synchronisation incorporé dans le signal d'horloge et de synchronisation appliqué à l'entrée du répéteur; en sortie de l'inverseur 23 le répéteur délivre le signal d'horloge et de synchronisation HMR, identique au signal d'horloge et de synchronisation HM, mais dans lequel le signal de synchronisation est décalé de deux périodes du signal d'horloge soit 2 x 125 = 250 nanosecondes.

Lorsque le répéteur est le premier RP1 d'un groupe, le signal d'horloge et de synchronisation qu'il reçoit est celui délivré par une horloge esclave. Comme indiqué précédemment, dans le signal HM le front f, positif, correspond à une inversion du front du signal d'horloge, et cette inversion entraîne une erreur de l'ordre de 1,5 nanoseconde en tenant compte d'une erreur supplémentaire de 0,5 nanoseconde introduite par la liaison horloge esclave/répéteur l'erreur $\varepsilon e$ à l'entrée du répéteur est $\varepsilon e = 2$ nanosecondes.

Dans le répéteur, l'inverseur 1 introduit, sur le front f du signal HMo une erreur de 1 ns, le circuit d'inversion 2 (porte OU exclusif) entraîne une erreur de 1 ns sur le front du signal CK correspondant au front f du signal HMo. Dans le signal d'horloge et de synchronisation HMR délivré par le répéteur ces erreurs se traduisent par une erreur $\varepsilon 1 = \varepsilon e + 2 = 4$ nanosecondes sur le front A du signal d'horloge, les deux périodes d'horloge précédant le signal de synchronisation ayant chacune une durée égale à 125 $\pm$ $\varepsilon 1$ nanosecondes, l'ensemble de ces deux périodes ayant une durée de 250 ns. Toujours dans le répéteur, la bascule 20 introduit sur le front f du signal HMRo une erreur de 0,5 ns, et l'inverseur 23 ajoute, sur le front f correspondant dans le signal HMR, une erreur de 1 ns; si l'on tient compte d'une erreur supplémentaire de 0,5 ns introduite par la liaison répéteur RP1 avec un autre répéteur, ou avec un récepteur, l'erreur sur le front f dans le signal reçu par le répéteur ou le récepteur est $\varepsilon 2 = 2$ nanosecondes. Chaque impulsion du signal de synchronisation a une durée de 125 $\pm$ $\varepsilon 2$ nanosecondes, la durée du signal de synchronisation étant de 250 nanosecondes.

Lorsqu'un répéteur reçoit un signal d'horloge et de synchronisation d'un autre répéteur il introduira des erreurs $\varepsilon 1$ et $\varepsilon 2$, mais compte tenu du fait qu'entre l'entrée et la sortie d'un répéteur le signal de synchronisation est décalé de deux périodes du signal d'horloge, ces erreurs ne se cumulent pas avec celles introduites par le répéteur précédent. Ainsi lorsqu'un groupe de répéteurs comporte n répéteurs, le signal d'horloge et de synchronisation HMR délivré par le dernier répéteur RPn du groupe comporte 2n périodes du signal d'horloge présentant une erreur $\varepsilon 1$ sur le rapport cyclique, le signal de synchronisation présentant une erreur $\varepsilon 2$, et étant décalé de 2n périodes d'horloge par rapport au signal de synchronisation HM à l'entrée du groupe.

Dans le cas d'une distribution d'horloge tripliquée, et en reprenant l'exemple indiqué, le signal d'horloge dans le signal d'horloge et de synchronisation HM (ou HMR en sortie d'un répéteur) à une fréquence de 8 MHz, et un récepteur R délivrer un signal d'horloge H à 4 MHz, obtenu par division par deux du signal à 8 MHz ce signal d'horloge H à 4 MHz comporte alors n + 1 périodes presentant chacune une erreur sur le rapport cyclique de

$$\frac{4 \text{ ns}}{125} = 3,2 \%$$

Ainsi dans le cas d'un groupe de n répéteurs, la perturbation du signal d'horloge H délivré par un récepteur, perturbation liée au signal de synchronisation, n'augmente pas d'un facteur n; les perturbations se répartissent dans le temps, sur n + 1 périodes, et la dégradation maximum du rapport cyclique reste dans des limites connues; seule la fréquence d'apparition de ces perturbations est multiplée par un facteur n + 1. Compte tenu de la faible valeur de l'erreur sur le rapport cyclique ces perturbations sur le signal d'horloge H ne sont pas gênantes pour les organes utilisateurs.

Les pertrubations introduites par les n répéteurs d'un groupe de répéteurs se répartissant sur 2n périodes du signal d'horloge d'un signal d'horloge et de synchronisation, HMR1 par exemple, figure 1, délivré à un récepteur R, et le signal de synchronisation étant décalé de 2n périodes d'horloge par rapport au signal de synchronisation dans le signal H1 à l'entrée du groupe de répéteurs, il est impératif que chaque groupe de répéteurs, dans une distribution d'horloge tripliquée, comporte le même nombre n de répéteurs, afin que les signaux de synchronisation des signaux HMR1, HMR2 et HMR3 soient en phase, le récepteur R ayant une logique majoritaire en entrée.

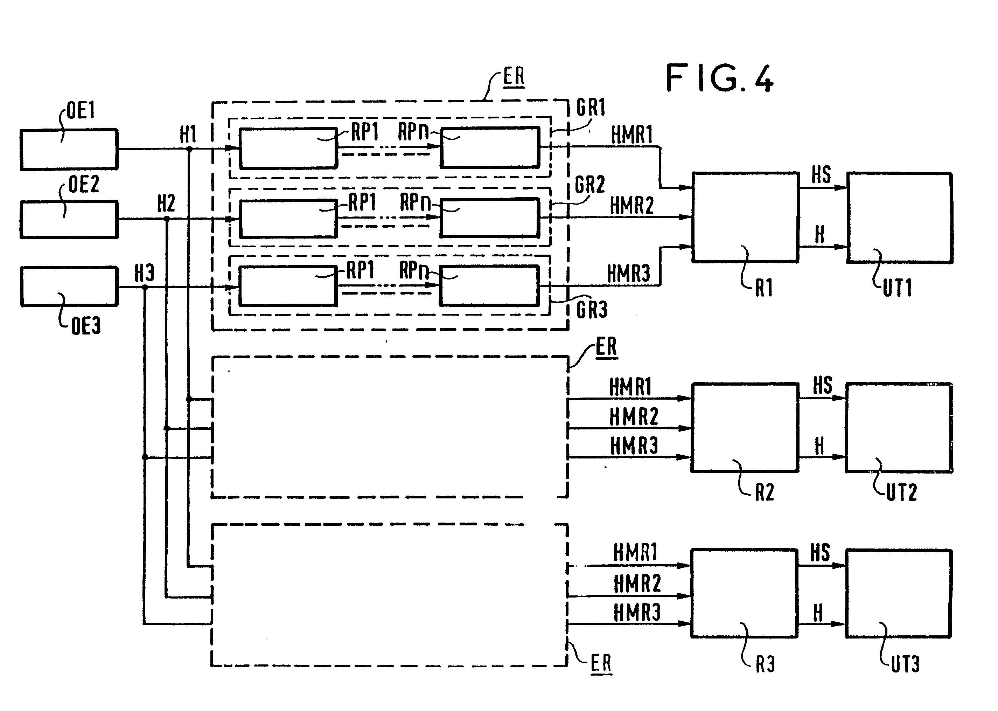

Lorsque dans un central de télécommunications les organes utilisateurs constituent des groupes alimentés chacun par un récepteur, il est également impératif que tous les groupes de répéteurs reliant les récepteurs aux horloges esclaves comportant le même nombre de répéteurs. La figure 4 illustre ce cas. Chaque groupe d'organes utilisateurs UT1, UT2, UT3 est relié à un récepteur R1, R2, R3 qui lui délivre un signal d'horloge H et un signal de synchronisation HS. Chaque récepteur est relié aux horloges esclaves OE1, OE2, OE3 par un ensemble de répéteurs ER constitué par trois groupes de répéteurs GR1, GR2, GR3 comportant chacun n répéteurs RP1 à RPn. De cette manière les signaux d'horloge H et de synchronisation HS délivrés par les récepteurs R1, R2, R3 aux organes utilisateurs sont en phase, condition nécessaire pour un bon fonctionnement du central de télécommunications.

**Revendications**

1. Répéteur pour distribution d'horloge tripliquée comportant des horloges (OE1, OE2, OE3) délivrant chacune un signal d'horloge et de synchronisation (H1, H2, H3) ayant un signal d'horloge et un signal de synchronisation constitué par une impulsion négative et une impulsion positive ayant chacune une durée égale à une période du signal d'horloge, une horloge étant reliée à un récepteur par au moins un répéteur, caractérisé par le fait qu'il comprend un inverseur (1) pour inverser un signal d'horloge et de synchronisation entrant un circuit d'inversion (2), un circuit de test (3), un circuit de restitution et de décalage (4) et un circuit de génération d'horloge (5), que le circuit de test (3) est relié en entrée à l'inverseur (1) et en sortie d'une part au circuit d'inversion (2) et d'autre part au circuit de restitution et de décalage (4), ledit circuit de test effectuant un test de la durée des impulsions du signal délivré par l'inverseur pour détecter le signal de synchronisation et délivrer une impulsion (VCF) suite à la détection, que le circuit de restitution et de décalage (4) a une première entrée reliée au circuit de test (3) une deuxième et une troisième entrées reliées à une sortie du circuit d'inversion (2) et une sortie reliée au circuit de génération d'horloge (5), ledit circuit de restitution et de decalage délivrant une impulsion de durée égale à celle d'une impulsion dudit signal de synchronisation et décalée de deux périodes dudit signal d'horloge par rapport à ladite impulsion négative du signal de synchronisation, et que le circuit de génération d'horloge (5) est relié en entrée à la sortie du circuit de restitution et de décalage (4), et au circuit d'inversion (2) et délivre en sortie un signal d'horloge et de synchronisation (HMR).

2. Répéteur pour distribution d'horloge tripliquée selon la revendication 1, caractérisé par le fait que le circuit de test (3) comporte une première ligne à retard (10), une bascule (11), de type D, et une deuxième ligne à retard (12), une entrée de la première ligne à retard et une entrée de données (D) de la bascule étant reliées en sortie de l'inverseur (1), une entrée horloge de la bascule étant reliée en sortie de la première ligne à retard, une sortie directe de bascule étant reliée au circuit d'inversion (2) et au circuit de restitution et de décalage (4) et une sortie inverse de la bascule étant reliée par la deuxième ligne à retard (12) à une entrée de remise à zéro de la bascule.

3. Répéteur pour distribution d'horloge tripliquée selon la revendication 1, caractérisé par le fait que le circuit d'inversion (2) est constitué par une porte OU exclusif ayant une première entrée reliée en sortie de l'inverseur (1), une deuxième entrée reliée à la sortie du circuit de test (3), et une sortie reliée à la deuxième et à la troisième entrées du circuit de restitution et de décalage (5), ledit circuit d'inversion délivrant un signal (CK) dans lequel une impulsion de front positif correspondant, dans le signal d'horloge et de synchronisation (HMo) délivré par l'inverseur, à un front négatif entre les deux impulsions du signal de synchronisation.

4. Répéteur pour distribution d'horloge tripliquée, selon la revendication 1, caractérisé par le fait que le circuit de restitution et de décalage comprend une première et une deuxième bascules (13, 14) de type D, la première bascule (13) ayant une entrée de données reliée à la sortie du circuit de test (3), une entrée horloge reliée à la sortie du circuit d'inversion (2) et une sortie reliée à une entrée de données de la deuxième bascule (14), et que la deuxième bascule à une entrée horloge reliée à la sortie du circuit d'inversion (2) et une sortie inverse reliée au circuit de génération d'horloge (5), les entrées horloge des première et deuxième bascules constituant lesdites première et deuxième entrées du circuit de restitution et de décalage.

5. Répéteur pour distribution d'horloge tripliquée selon la revendication 1, caractérisé par le fait que le circuit de génération d'horloge (5) comporte une bascule (20) de type D, une ligne à retard (21), une porte NON-ET (22) et un inverseur (23), que ladite bascule à une entrée de données reliée à la sortie du circuit de restitution et de décalage (4), une entrée horloge reliée à la sortie du circuit d'inversion (2) et une sortie directe reliée audit inverseur (23) qui délivre un signal d'horloge et de synchronisation (HMR), et que la porte NON-ET (22) a une entrée reliée à la sortie du circuit de restitution et de décalage (4), une autre entrée reliée par la ligne à retard (21) à la sortie directe de la bascule, et une sortie reliée à une entrée de remise à zéro de la bascule.

**Patentansprüche**

1. Verstärker für Dreifachtaktverteilung mit Taktgebern (OE1, OE2, OE3), von denen jeder ein Takt- und Synchronisationssignal (H1, H2, H3) mit einem Taktsignal und einem Synchronisationssignal liefert, das aus einem negativen und einem positiven Impuls einer Dauer von jeweils der Größe der Periode des Taktsignals besteht, wobei ein Taktgeber über mindestens einen Verstärker an einen Empfänger angeschlossen ist, dadurch gekennzeichnet, daß er einen Inverter (1) zur Umkehrung eines ankommenden Takt- und Synchronisationssignals (HM), einen Inversionskreis (2), einen Testkreis (3), einen Wiederherstellungs- und Schiebekreis (4) und einen Takterzeugungskreis (5) aufweist, daß der Testkreis (3) eingangsseitig an den Inverter (1) und ausgangsseitig an den Inversionskreis (2) einerseits und an den Wiederherstellungs- und Schiebekreis (4) andererseits angeschlossen ist, wobei der Testkreis eine Überprüfung der Dauer der Impulse des vom Inverter gelieferten Signals durchführt, um das Synchronisationssignal zu erfassen und einen Impuls (VCF) als Folge der zu Erfassung liefert, daß der Wiederherstellungs- und Schiebekreis (4) einen ersten an den Testkreis (3) angeschlossenen Eingang, einen zweiten und einen dritten Eingang, die an einen Ausgang des Inversionskreises (2) angeschlossen sind, und einen an den Takterzeugungskreis (5) angeschlossenen Ausgang besitzt, wobei der Wiederherstellungs- und Schiebekreis einen Impuls von einer Dauer gleich derjenigen eines Impulses des Synchronisationssignals liefert, der um zwei Perioden des Taktsignals gegen den negativen Impuls des Synchronisationssignals verschoben ist, und daß der Takterzeugungskreis (5) eingangsseitig mit dem Ausgang des Wiederherstellungs- und Schiebekreises (4) und mit dem Inversionskreis (2) verbunden ist und am Ausgang ein Takt- und Synchronisationssignal (HMR) liefert.

2. Verstärker für Dreifachtaktverteilung nach Anspruch 1, dadurch gekennzeichnet, daß der Testkreis (3) eine erste Verzögerungsleitung (10) eine Kippstufe (11) vom Typ D, und eine zweite Verzögerungsleitung (12) aufweist, wobei ein Eingang der ersten Verzögerungsleitung und ein Dateneingang (D) der Kippstufe mit dem Ausgang des Inverters (1), ein Takteingang der Kippstufe mit dem Ausgang der ersten Verzögerungsleitung, ein direkter Ausgang der Kippstufe mit dem Inversionskreis (2) und dem Wiederherstellungs- und Schiebekreis (4), und ein invertierter Ausgang der Kippstufe über die zweite Verzögerungsleitung (12) mit einem Rückstelleingang der Kippstufe verbunden ist.

3. Verstärker für Dreifachtaktverteilung nach Anspruch 1, dadurch gekennzeichnet, daß der Inversionskreis (2) aus einem Exklusiv-ODER-Tor besteht, dessen erster Einagng an den Ausgang des Inverters (1), dessen zweiter Eingang an den Ausgang des Testkreises (3) und dessen Ausgang an den zweiten und an den dritten Eingang des Wiederherstellungs- und Schiebekreises (5) angeschlossen ist, wobei der Inversionskreis ein Signal (CK) liefert, in welchem ein Impuls mit positiver Flanke in dem vom Inverter gelieferten Takt- und Synchronisationssignal (HMo) einer negativen Flanke zwischen den beiden Impulsen des Synchronisationssignals entspricht.

4. Verstärker für Dreifachtaktverteilung nach Anspruch 1, dadurch gekennzeichnet, daß der Wiederherstellungs- und Schiebekreis eine erste und eine zweite Kippstufe (13, 14) vom Typ D aufweist, wobei ein Dateneingang der ersten Kippstufe (13) mit dem Ausgang des Testkreises (3), ein Takteingang mit dem Ausgang des Inversionskreises (2) und ein Ausgang mit einem Dateneingang der zweiten Kippstufe verbunden ist, und daß die zweite Kippstufe einen Takteingang, der mit dem Ausgang des Inversionskreises (2) verbunden ist, und einen invertierten Ausgang besitzt, der mit dem Takterzeugungskreis (5) verbunden ist, wobei die Takteingänge der ersten und zweiten Kippstufe den ersten und den zweiten Eingang des Wiederherstellungs- und Schiebekreises bilden.

5. Verstärker für Dreifachtaktverteilung nach Anspruch 1, dadurch gekennzeichnet, daß der Takterzeugungskreis (5) eine Kippstufe (20) vom Typ D, eine Verzögerungsleitung (21) ein NAND-Tor (22) und einen Inverter (23) aufweist, daß die Kippstufe einen Dateneingang, der mit dem Ausgang des Wiederherstellungs- und Schiebekreises (4) verbunden ist, einen Takteingang, der mit dem Ausgang des Inversionskreises (2) verbunden ist und einen direkten Ausgang besitzt, der mit dem Inverter (23) verbunden ist, welcher ein Takt- und Synchronisationssignal (HMR) liefert, und daß das NAND-Tor (22) über einen Eingang mit dem Ausgang des Wiederherstellungs- und Schiebekreises (4), über einen weiteren Eingang und die Verzögerungsleitung (21) mit dem direkten Ausgang der Kippstufe und über einen Ausgang mit einem Rückstelleingang der Kippstufe verbunden.

**Claims**

1. A repeater for the distribution of a triplicated clock comprising clocks (OE1, OE2, OE3) each adapted to deliver a clock and synchronization signal (H1, H2, H3) including a clock signal and a synchronization signal and consisting of a positive pulse and a negative pulse, each pulse having a duration equal to one period of the clock signal, a clock being connected by a receiver via at least one repeater, characterized in that the repeater comprises an inverter (1) adapted to invert an incoming clock and synchronization signal (HM) an inverter circuit (2), a test circuit (3), a restore and shift circuit (4), and a clock generator circuit (5), that the test circuit (3) has an input connected to the inverter (1) and an output connected on the one hand to the inverter circuit (2) and on the other hand to the restore and shift circuit (4), said test circuit being adapted to test the duration of the signal pulses coming from the inverter in order to detect the synchronization signal and to deliver a pulse (VCF) in response to such detection, that the restore and shift circuit (4) has a first input connected to the test circuit (3), a second and a third input connected to an output of the inverter circuit (2) and an output connected to the clock generator circuit (5), said restore and shift circuit being adapted to supply a pulse of a duration equal to that of a pulse of said synchronization signal and shifted by two periods of said clock signal relative to said negative pulse of the synchronization signal, and that the clock generator circuit (5) has its input connected to the output of the restore and shift circuit (4) and to the inverter circuit and is adapted to deliver at its output a clock and synchronization signal (HMR).

2. A repeater for the distribution of a triplicated clock according to claim 1, characterized in that the test circuit (3) comprises a first delay line (10) a type D flip-flop (11) and a second delay line (12), an input of the first delay line and a data input (D) of the flip-flop being connected to the output of the inverter (1), a clock input of the flip-flop being connected to the output of the first delay line, a direct output of the flip-flop being connected to the inverter circuit (2) and to the restore and shift circuit (4) and a complemented output of the flip-flop being connected via the second delay line (12) to a reset input of the flip-flop.

3. A repeater for the distribution of a triplicated clock according to claim 1, characterized in that the inverter circuit (2) is constituted by an exclusive-OR gate having a first input connected to the output of the inverter (1) a second input connected to the output of the test circuit (3) and an output connected to the second and the third inputs of the restore and shift circuit (5), said inverter circuit being adapted to deliver a signal (CK) in which a positive edge corresponds, in the clock and synchronization signal (HMo) delivered by the inverter, to a negative edge between the two pulses of the synchronization signal.

4. A repeater for the distribution of a triplicated clock according to claim 1, characterized in that the restore and shift circuit comprises first and second type D flip-flops (13, 14), the first flip-flop (13) having a data input connected to the output of the test circuit (3), a clock input connected to the output of the inverter circuit (2) and an output connected to a data input of the second flip-flop (14), and that the second flip-flop has a clock input connected to the output of the inverter circuit (2) and a complemented output connected to the clock generator circuit (5), the clock inputs of the first and the second flip-flops constituting said first and second inputs of the restore and shift circuit.

5. A repeater for the distribution of a triplicated clock according to claim 1, characterized in that the clock generator circuit (5) comprises a type D flip-flop (20), a delay line (21), a NAND gate (22) and an inverter (23), that said flip-flop has a data input connected to the output of the restore and shift circuit (4), a clock input connected to the output of the inverter circuit (2) and a direct output connected to said inverter (23) which delivers a clock and synchronization signal (HMR), and that the NAND gate (22) has one input connected to the output of the restore and shift circuit (4), another input connected via the delay line (21) to the direct output of the flip-flop and an output connected to a reset input of the flip-flop.

# FIG.1

EP 0 190 729 B1

# FIG. 2

EP 0 190 729 B1

FIG. 3

FIG.4